# FASCICULE DE BREVET EUROPEEN

(11) **EP 3 325 248 B1**
(45) Date de publication et mention de la délivrance du brevet: **31.03.2021**
(21) Numéro de dépôt: 16741602.3
(22) Date de dépôt: 18.07.2016
(51) Int. Cl.: B29C 48/27, B29C 48/25, B29C 48/265, B29B 7/80, B29K 21/00, B29C 48/03, B29B 7/74

(54) **DISPOSITIF ET PROCEDE DE NETTOYAGE D'UNE EXTRUDEUSE POUR MELANGES D'ELASTOMERES**
VORRICHTUNG UND VERFAHREN ZUR REINIGUNG EINES EXTRUDERS FÜR ELASTOMERMISCHUNGEN
DEVICE AND METHOD FOR CLEANING AN EXTRUDER FOR ELASTOMER MIXTURES

(30) Priorité: 17.07.2015 FR 1556801
(43) Date de publication de la demande: 30.05.2018
(73) Titulaire: Compagnie Générale des Etablissements Michelin, 63000 Clermont-Ferrand (FR)
(72) Inventeur: HOMBERT, Christophe, 63040 Clermont-Ferrand Cedex 9 (FR)
(74) Mandataire: Redouté, Gilles Pierre
(86) Numéro de dépôt international: PCT/EP2016/067085
(87) Numéro de publication internationale: WO 2017/013080

(56) Documents cités:
- EP-A1- 1 552 914
- WO-A1-2010/105682
- WO-A2-2013/030226
- WO-A2-2015/032381
- DE-A1- 19 509 375
- DE-C1- 3 638 623
- FR-A1- 2 189 187
- JP-A- 2005 324 395

## Description

L'invention concerne le domaine de l'extrusion des mélanges d'élastomères plus particulièrement destinés à la fabrication des pneumatiques.

De manière connue, la fabrication des profilés à base de mélanges de caoutchouc qui entrent dans la composition des pneumatiques fait appel à des extrudeuses qui ont pour fonction de produire des bandes de caoutchouc selon un profil déterminé. Ces extrudeuses sont formées principalement d'un fourreau fixe et d'une vis d'extrusion mobile en rotation à l'intérieur du fourreau.

La forme du fourreau, celle de la vis et leur agencement sont tels que la mise en rotation de la vis a pour effet de fournir un travail mécanique au mélange dans le but d'en accroître la fluidité, d'une part, et de propulser ledit mélange vers une filière d'extrusion dans le but de conférer un profil déterminé au produit extrudé, d'autre part. La filière d'extrusion est généralement formée par une buse fixe ou par l'interstice situé entre une lame profilée fixe et un rouleau rotatif ou entre deux rouleaux rotatifs tournant dans des sens contraires. La bande continue sortant de l'appareil d'extrusion peut être enroulée sur des moyens de stockage en vue d'une utilisation ultérieure ou peut alimenter directement un dispositif d'assemblage situé en aval.

A la fin de l'opération d'extrusion on doit vider complétement l'extrudeuse notamment en vue de son alimentation avec un mélange différent. Cette opération est souvent réalisée manuellement par l'opérateur qui procède au nettoyage de l'intérieur de l'extrudeuse après avoir fait basculer en arrière la voûte de celle-ci. Une opération manuelle, fastidieuse et consommatrice de temps.

Le document EP 0 403 164 apporte une solution au problème de nettoyage manuel d'une extrudeuse et propose un appareil comportant des mâchoires de préhension pour retirer la matière solide résiduelle de la tête d'extrusion, des moyens de déplacement des mâchoires sur un rail horizontal pour évacuer la matière résiduelle extraite et des moyens de dégagement de celle-ci lorsque les mâchoires arrivent dans la position d'évacuation. Cette solution permet, certes, un nettoyage automatique de la tête d'extrusion, mais au prix d'une installation annexe assez complexe.

Le document JP 2005324395 décrit une autre installation de nettoyage d'une extrudeuse qui est reliée à une pompe à engrenages par une zone intermédiaire, la zone intermédiaire communiquant avec un vérin dont la tige de poussée est perpendiculaire à l'axe longitudinal de l'extrudeuse et est réalisée de manière à exercer un effort sur le volume de gomme de la zone intermédiaire pour l'évacuer via une vanne de décharge adjacente. L'installation de ce document fait également appel à des moyens additionnels de type racleur et vanne de décharge qui rendent complexe l'ensemble de l'installation. Cette installation ne permet pas de vider la tête d'extrusion qui doit alors être démontée et nettoyée.

On connaît par ailleurs, du document FR 2889818, une extrudeuse dans laquelle le fourreau et la filière forment un ensemble qui est monté mobile en translation par rapport à la vis d'extrusion dans un but de réglage de la position de la vis par rapport à la filière. Des opérations de maintenance de la vis peuvent être effectuées lorsque la vis est complètement dégagée du fourreau. Toutefois, le déplacement en translation de l'ensemble fourreau et filière fait appel à des moyens d'actionnement comportant deux vérins en opposition et, de plus, des moyens de commande pour contrôler et régler la position de la vis doivent également être prévus. Une telle solution rend chère et complexe la construction de l'extrudeuse.

Le document EP 1552914 propose, de manière similaire au précédent, de séparer la vis du fourreau de l'extrudeuse, mais cette fois dans un but de nettoyage de celle-ci. L'extrudeuse de ce document est prévue pour alimenter deux rouleaux horizontaux de calandrage d'un profilé de caoutchouc, adjacents, supportés par un cadre commun qui supporte en même temps le fourreau de l'extrudeuse. Plus particulièrement selon ce document, pour accéder à l'intérieur de l'extrudeuse, on déplace le cadre commun sur un rail horizontal en commandant un vérin hydraulique pour écarter le fourreau de la vis d'extrusion, et ensuite on déplace le cadre de support des deux rouleaux de calandrage sur un deuxième rail horizontal parallèle au premier pour écarter le fourreau par rapport aux rouleaux de calandrage. Ceci nécessite déjà de munir les extrémités du fourreau de deux dispositifs d'étanchéité amovibles et de fournir un double système de déplacement, l'un du fourreau et l'autre du cadre commun. Une telle solution présente des faiblesses au niveau de l'étanchéité du fourreau et nécessite des systèmes de déplacement compliquées et qui, de plus, font subir des efforts importants au vérin hydraulique d'actionnement.

On connaît par ailleurs le document WO 2010/105682 qui décrit un système comportant, agencées en série, une extrudeuse, une pompe à engrenages et une buse de sortie. Ce document propose une solution de nettoyage de la pompe à engrenages en réalisant le carter de la pompe en deux parties et en déplaçant axialement une partie du carter de la pompe avec certains de ses composants par rapport aux autres. Cette solution permet, certes de nettoyer la pompe, mais ne permet pas de nettoyer l'extrudeuse, ni la voûte située avant la buse de sortie.

Le document FR 2189187 propose une solution pour nettoyer la tête d'injection d'un système comportant une extrudeuse et une tête d'injection qui débite dans une calandre. Pour cela, la tête d'injection est réalisée en deux parties, elle comporte donc deux demi-têtes, amenées à coopérer au niveau d'un plan de jonction radial. Les demi-têtes sont verrouillées ensemble en position de travail. Lors du nettoyage, la demi-tête supérieure se déplace axialement avec l'extrudeuse, alors que la demi-tête inférieure est immobile, en étant solidaire du bâti de la machine. Plusieurs moyens de fermeture individuels sont prévus dans la partie supérieure pour assurer l'étanchéité au niveau du plan de jonction. Toutefois, un tel montage en porte à faux de l'extrudeuse et de la demi-tête supérieure s'avère préjudiciable pour l'étanchéité du système. En effet, les efforts de fermeture importants sont repris au niveau de la demi-tête inférieure et provoquent à terme un matage des faces de contact et donc des risques de fuite au niveau du plan de jonction. Le système n'est donc pas fiable dans le temps, tout en restant complexe.

Enfin, le document WO-2015/032381 décrit un système qui suggère de fractionner le fourreau en une portion de fourreau amont et une portion de fourreau aval réunies par une bride à vis, de sorte que l'on puisse mettre à nu l'extrémité aval de la vis en l'extrayant de la portion de fourreau aval après avoir débridé la portion de fourreau amont.

L'invention a pour objectif de pallier au moins l'un des inconvénients des documents ici décrits et de proposer un dispositif et un procédé de nettoyage d'une extrudeuse et de la filière de sortie de celle-ci, l'extrudeuse étant destinée à fonctionner avec différents mélanges d'élastomères afin de permettre de changer rapidement de mélange sans rendre complexe sa structure par ailleurs.

Cet objectif est atteint avec un dispositif de nettoyage d'une extrudeuse destinée à fonctionner avec des mélanges d'élastomères, selon la revendication 1, le dispositif comportant un cadre supportant une vis et un fourreau, la vis étant amenée à tourner autour de l'axe longitudinal X-X' du fourreau lorsqu'elle est entraînée en rotation par des moyens d'entraînement, le fourreau comportant une entrée d'alimentation en mélanges d'élastomères et une sortie débouchant directement dans une filière d'extrusion montée sur un support, caractérisé en ce que le cadre est monté mobile en translation par rapport au support de la filière selon une direction parallèle à l'axe longitudinal X-X' entre une première position dans laquelle le fourreau et la filière sont en contact étanche pour permettre au mélange d'élastomères de passer à travers la filière et une deuxième position dans laquelle le fourreau est écarté de la filière pour réaliser le nettoyage, le plan de joint entre le fourreau et la filière étant sensiblement axisymétrique par rapport à l'axe X-X' et en ce que ledit dispositif comprend un mécanisme de couplage automatique pour verrouiller et déverrouiller rapidement le fourreau et la filière et permettre le déplacement du cadre entre les deux positions.

Le dispositif de nettoyage d'une extrudeuse selon l'invention comporte donc un cadre qui forme un support pour le fourreau, la vis d'extrusion et les moyens d'entraînement en rotation de celle-ci par rapport au fourreau. Selon l'invention, le cadre est monté mobile en translation par rapport à une filière d'extrusion située au voisinage de l'extrémité aval du fourreau, la filière d'extrusion étant montée sur un support fixe du dispositif et le fourreau se fermant sur la filière selon un plan de joint qui est sensiblement axisymétrique par rapport à l'axe X-X'. Par plan de joint on comprend le plan selon lequel s'effectue la séparation et ensuite la jonction entre le fourreau et la filière lors du déplacement axial du cadre. En effet, le déplacement axial du cadre permet de plaquer le fourreau contre la filière et assurer l'étanchéité entre les deux dans une même direction que celle du déplacement. Le dispositif comporte également un mécanisme de couplage automatique qui permet de verrouiller rapidement le fourreau sur le support de filière en position de travail de l'extrudeuse et de le déverrouiller rapidement afin de permettre au fourreau de s'écarter de la filière et de nettoyer l'extrudeuse. Ainsi, lorsque la jonction du fourreau et de la filière se fait selon un plan de joint axisymétrique, les efforts de fermeture sont répartis de manière symétrique par rapport à l'axe de l'extrudeuse pour une meilleure étanchéité au niveau de la jonction. De surcroît, ceci permet le nettoyage optimum à la fois de l'extrudeuse et de la filière d'extrusion.

Selon d'autres caractéristiques avantageuses de l'invention :
- Le mécanisme de couplage automatique comprend un dispositif de verrouillage réalisé de manière à ce que les efforts de verrouillage soient uniformément répartis sur la circonférence du fourreau ; les efforts de verrouillage étant ainsi uniformément répartis sur la circonférence, on obtient une meilleure étanchéité et plus de fiabilité dans le temps;
- Le mécanisme de couplage automatique comprend un système du type à vis et écrou comportant une première bague qui entoure le fourreau et coopère avec une deuxième bague solidaire du support et entourant la filière et un mécanisme d'entraînement en rotation de la vis ou de l'écrou ; ceci permet au système de couplage d'assurer une fixation axiale rapide et, en même temps de fournir l'effort de verrouillage avec reprise des jeux axiaux, par exemple ceux qui sont dus aux tolérances de fabrication ou à l'usure. Ce mécanisme permet de démultiplier considérablement l'effort de l'actionneur de façon à utiliser des actionneurs type vérin électrique. De surcroît, on choisit un actionneur type vérin électrique à pas fin pour améliorer la démultiplication et la précision de positionnement ;
- La deuxième bague comporte des rampes inclinées, elle est coaxiale à la première bague qui est solidaire de l'extrémité de sortie du fourreau et comprend des rampes inclinées qui sont amenées à coopérer avec les rampes inclinées de la deuxième bague. L'inclinaison des rampes suit une hélice enroulée autour de l'axe X-X'. Ainsi les efforts de verrouillage sont uniformément répartis sur toute la circonférence du fourreau ce qui permet d'avoir une très bonne étanchéité entre le fourreau et le support de filière, surtout pour des valeurs élevées de la pression de travail à l'intérieur de l'extrudeuse (environ 200 bar) ;
- Les rampes inclinées desdites première et deuxième bague sont réalisées sous forme d'une pluralité de tenons uniformément répartis sur la circonférence de chaque bague, les tenons d'une bague pouvant coulisser axialement dans les espaces existant entre les tenons de l'autre bague. Les tenons constituent ainsi plusieurs filets uniformément répartis sur la circonférence de chaque bague, leur géométrie permettant de s'engager et se verrouiller par rotation d'une bague par rapport à l'autre, ensuite se désengager et coulisser axialement ;
- Le mécanisme d'entraînement en rotation comprend un dispositif à genouillère reliant de manière articulée l'une des bagues à la tige d'un vérin d'actionnement en translation. Ce mécanisme à genouillère permet de démultiplier l'effort de serrage appliqué à la bague lors du verrouillage. Par ailleurs, au moins l'une des biellettes de la genouillère est réglable en longueur de façon à optimiser l'angle de fermeture pour démultiplier fortement l'effort ;
- Le dispositif comprend une unité centrale de contrôle en ouverture et fermeture du mécanisme de couplage automatique. Ceci assure un actionnement complètement automatisé du dispositif ;
- Dans une variante de l'invention, l'extrudeuse débite dans l'entrefer formé entre un premier rouleau et un deuxième rouleau de calandrage qui sont rotatifs et sont amenés à tourner dans des sens contraires autour d'axes parallèles entre eux et perpendiculaires à l'axe longitudinal du fourreau. Ces rouleaux sont avantageusement montés sur le support de filière qui est fixe.

L'objet de l'invention est également atteint avec un procédé, selon la revendication 9, de nettoyage d'une extrudeuse destinée à fonctionner avec des mélanges d'élastomères comportant un cadre supportant une vis et un fourreau, la vis étant amenée à tourner dans le fourreau lorsqu'elle est entraînée en rotation autour de l'axe longitudinal du fourreau par des moyens d'entraînement, le fourreau comportant une entrée d'alimentation en mélanges d'élastomères et une sortie débouchant dans une filière d'extrusion montée sur un support, le procédé comportant les étapes suivantes :
- déverrouiller le fourreau par rapport à la filière à l'aide d'un mécanisme de couplage automatique permettant de verrouiller et déverrouiller rapidement le fourreau et la filière selon un plan de joint sensiblement axisymétrique par rapport à l'axe X-X',
- déplacer en translation le cadre par rapport au support de la filière selon une direction parallèle à l'axe longitudinal entre une première position dans laquelle le fourreau et la filière sont en contact étanche pour permettre au mélange d'élastomères de passer à travers la filière et une deuxième position dans laquelle le fourreau est écarté de la filière pour permettre le nettoyage,
- entraîner la vis en rotation pour réaliser la vidange de l'extrudeuse.

Selon d'autres caractéristiques avantageuses de l'invention :
- l'entraînement en rotation de la vis dans la deuxième position du cadre se fait dans un même sens que celui de rotation de la vis lorsque le bâti est dans la première position, ce qui permet de vider le mélange résiduel qui se trouve à l'extrémité aval de l'extrudeuse ;
- le déplacement en translation du cadre se fait sur une distance au moins égale à la distance entre l'extrémité aval de la vis et celle de la filière, ce qui permet de dégager complètement le mélange résiduel de la filière ;
- la filière a une forme convergente afin d'éviter le blocage du mélange par contre-dépouille ;
- le fourreau comprend des griffes d'accroche du mélange d'élastomère ; ces griffes qui sont actives lors du déplacement du cadre entre les deux positions et permettent d'emporter le mélange résiduel lors du déplacement de l'ensemble de l'extrudeuse ;
- dans une variante de réalisation de l'invention, la filière de l'extrudeuse débite dans l'entrefer formé entre un premier rouleau et un deuxième rouleau de calandrage. Lorsque le cadre est éloigné dans la deuxième position, lesdits premier et deuxième rouleaux sont entraînés pour évacuer le mélange restant entre la filière et ces rouleaux.

L'invention sera mieux comprise à la lecture des figures 1 à 5 annexées, qui sont fournies à titre d'exemples et ne présentent aucun caractère limitatif, dans lesquelles :
- la figure 1 représente une vue générale schématique en coupe axiale d'un dispositif de nettoyage d'une extrudeuse selon l'invention,
- les figures 2a à 2d représentent, par des vues schématiques en coupe, les différentes étapes du procédé de nettoyage d'une extrudeuse selon l'invention,
- la figure 3 est une vue en coupe réalisée avec le plan A-A de la figure 2d du dispositif de l'invention lorsque le dispositif de verrouillage est en position déverrouillée,
- la figure 4 est une vue en coupe réalisée avec le plan A-A de la figure 2d du dispositif de l'invention lorsque le dispositif de verrouillage est en position verrouillée ;
- la figure 5 est une vue en perspective d'une partie du mécanisme de couplage automatique du dispositif de l'invention, l'extrudeuse et le support de filière étant situés à distance l'un de l'autre.

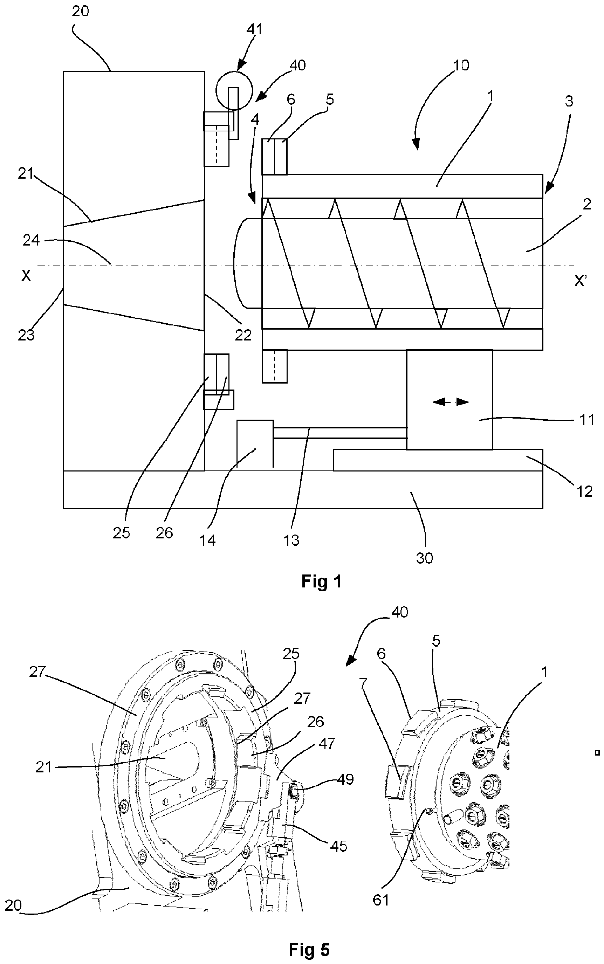

Le dispositif de nettoyage d'une extrudeuse destinée à fonctionner avec des mélanges d'élastomères est représenté à la figure 1 et comprend un bâti 30 sur lequel sont montés un ensemble formant une extrudeuse 10 et un support 20 d'une filière 21. L'ensemble formant extrudeuse 10 comprend une vis 2 cylindrique qui tourne à l'intérieur d'un fourreau 1 et les moyens d'entraînement (non visibles sur le dessin) de la vis, tel un moteur électrique et un réducteur agencés à l'extrémité amont e celle-ci. La vis 2 tourne à l'intérieur du fourreau 1, autour de l'axe longitudinal X-X' de celui-ci. Le fourreau 1 a une forme générale cylindrique et comporte, en amont, une entrée 3 d'alimentation en matériaux élastomères et, en aval, une sortie 4 en direction d'une filière à travers laquelle passe le mélange d'élastomères propulsé par la vis 2. On rappelle que, par amont et aval, on comprend tel que vu dans le sens d'écoulement du matériau entre l'entrée d'alimentation du fourreau et la sortie via la filière 21.

Le support 20 est solidaire du bâti 30 et comporte un orifice traversant 24 d'axe de symétrie aligné sur l'axe longitudinal X-X' du fourreau 1, dans le prolongement de ce dernier. La filière 21 est montée à l'aide des vis de fixation dans l'orifice traversant 24 du support 20 de manière à être centrée sur l'axe de ce dernier. La filière 21 a une forme générale aplatie (la section transversale étant de forme générale elliptique) et elle est convergente, tel que vu en coupe axiale, entre une extrémité amont 22 située en regard de la sortie 4 du fourreau 1 et une extrémité aval 23 de sortie d'un profilé. En fonctionnement, le mélange propulsé par la vis 2 sort sous forme d'un profilé à travers la filière 21 et est transféré par exemple via un convoyeur en direction d'une bobine de stockage sur laquelle il est enroulé.

Dans une variante avantageuse de l'invention, la filière 21 débite dans l'entrefer formé entre un premier rouleau et un deuxième rouleau de calandrage d'axes horizontaux parallèles entre eux et perpendiculaires à l'axe longitudinal X-X', les deux rouleaux (non représentés sur les dessins) étant entraînés en rotation dans des sens contraires autour de leurs axes respectifs. Les rouleaux sont montés avec leurs systèmes d'entraînement respectifs sur le support 20, en sortie de la filière 21. Les deux rouleaux forment un système de filière à rouleaux ayant pour rôle de profiler sous forme de bande le mélange d'élastomères qui sorte par la filière 21. Le profilé ainsi obtenu est ensuite enroulé sur une bobine de stockage ou il peut être posé directement sur un tambour d'assemblage adjacent à l'un des rouleaux.

Selon l'invention, l'ensemble formant extrudeuse 10 est monté sur un cadre 11 mobile, le cadre étant apte à se déplacer en translation dans une direction parallèle à l'axe longitudinal X-X' du fourreau 1, comme indiqué par la double flèche à la fig. 1. Le cadre 11 comporte à cet effet des pattes de guidage 12 qui sont amenées à coulisser le long d'un rail fixe (non visible sur les dessins) appartenant au bâti 30. Le cadre 11 est mobile sous l'action de la tige 13 d'un vérin électrique 14 monté sur le bâti 30. L'extrudeuse 10 est ainsi déplacée axialement par rapport à une filière d'extrusion 21 montée fixe sur un support 20 de manière à réaliser une séparation, puis une jonction des deux parties selon un plan de joint étanche axisymétrique par rapport à l'axe X-X'. La partie frontale du fourreau 1 de l'extrudeuse est ainsi plaquée sans jeu sur la partie frontale en vis-à-vis de la filière 21 et maintenue en position par un mécanisme de couplage automatique.

Le dispositif de nettoyage de l'extrudeuse selon l'invention comprend à cet effet un mécanisme de couplage automatique 40 permettant de verrouiller et de déverrouiller rapidement le fourreau 1 par rapport à la filière 21 afin de pouvoir les mettre en communication étanche et ensuite de les séparer facilement. Le mécanisme de couplage automatique 40 comprend deux bagues 5, 25 munies chacune de tenons de fixation 6, 26 et un mécanisme 41 d'entrainement en rotation à genouillère d'une bague par rapport à l'autre. Plus particulièrement, une première bague 5 est montée fixe sur le fourreau 1, elle est agencée de manière à entourer l'extrémité de sortie 4 de ce dernier, et une deuxième bague 25 est montée à possibilité de rotation sur le côté du support 20 faisant face au fourreau 1, les deux bagues 5, 25 sont coaxiales, elles étant agencées selon l'axe X-X'. La deuxième bague 25 est tenue par un support annulaire 27 à l'intérieur duquel elle est amenée à tourner, le support annulaire 27 étant solidaire du support 20. La première bague 5 comprend des tenons 6 présentant à leur extrémité amont des rampes inclinées 7 qui sont amenées à coopérer avec les rampes inclinées 27 situées à l'extrémité aval des tenons 26 de la deuxième bague. Les rampes inclinées 7 et 27 suivent une courbe hélicoïdale qui, dans un mode préféré de réalisation de l'invention présente un angle d'inclinaison d'environ 10° pour être réversible et sortir du cône de frottement entre les deux pièces. Les tenons 5, 25 représentent ainsi les filets du mécanisme de couplage automatique 40 qui est du type à vis et écrou.

Le nombre de tenons doit être au minimum de deux pour répartir l'effort de fermeture sur la circonférence de la bague, le nombre des tenons augmentant avec le diamètre de la bague et l'effort axial repris par les tenons. Par ailleurs, on observe que plus le nombre de tenons est faible, plus l'angle de rotation de la deuxième bague 25 pour déverrouiller/verrouiller est important, plus les biellettes de la genouillère doivent être longues, et, par conséquent, la course du vérin doit être plus importante également. La solution de l'invention permet de prendre en compte toutes ces contraintes et de fournir un mécanisme de couplage automatique d'encombrement réduit qui assure en même temps une fermeture efficace, sans risques de fuite du mélange à l'interface entre les deux pièces. Dans l'exemple illustré, la deuxième bague 25 comprend huit tenons, ce qui correspond au nombre de filets du mécanisme de couplage automatique 40, pour un diamètre de la bague d'environ 180mm.

Les tenons 6 et 26 sont uniformément répartis sur la circonférence de chaque bague 5 et 25 et sont réalisés de manière à ce que les tenons 6 d'une bague 5 puissent coulisser axialement dans les espaces qui existent entre les tenons 26 de l'autre bague 25 en vis-à-vis lorsque le fourreau 1 et la filière 21 sont en position de déverrouillage.

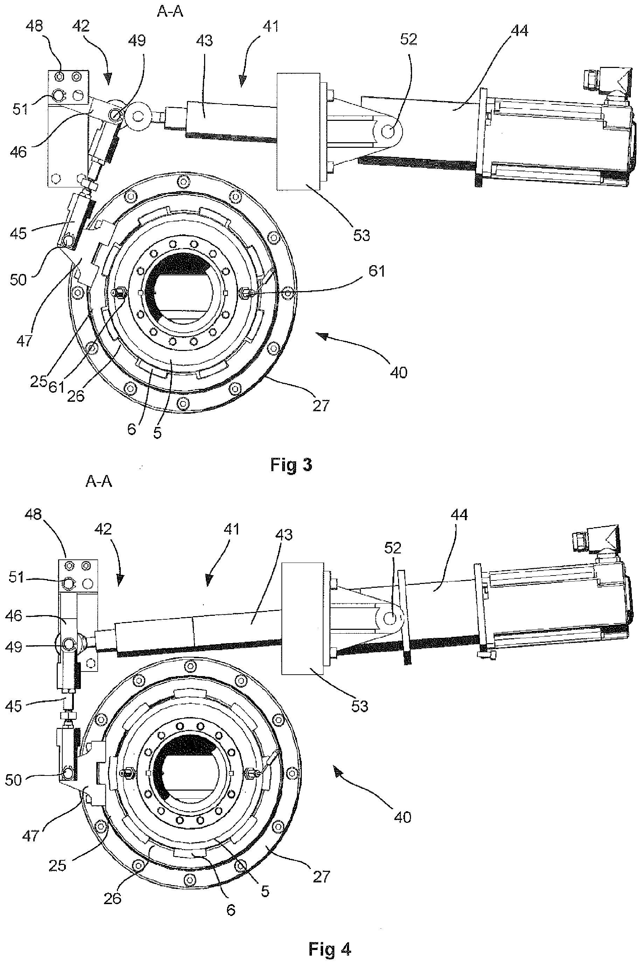

Le mécanisme d'entraînement en rotation 41 de la deuxième bague 25 comprend un dispositif à genouillère 42 à tige de poussée qui est la tige 43 d'un vérin électrique 44, tel que mieux visible aux figures 3 et 4. Plus particulièrement, le dispositif à genouillère 42 comprend deux biellettes 45 et 46 montées de façon à pivoter au niveau d'une articulation commune 49 d'axe parallèle à l'axe X-X'. Une première biellette 45 est montée via un pivot 50 et une bride 47 sur la face frontale de la deuxième bague 25, alors que la deuxième biellette 46 est montée via un pivot 51 et un montant 48 sur le support 20, les axes des pivots 50, 51 étant aussi parallèles à l'axe X-X'. En fonctionnement, lorsque le vérin est commandé en fermeture, sa tige 43 s'allonge et exerce une pression sur l'articulation 49 du dispositif à genouillère 42 qui actionne en rotation la deuxième bague 25 par rapport à la première bague 5 qui est fixe et fait passer le dispositif de verrouillage du mécanisme de couplage automatique 40 de la position d'ouverture illustrée à la figure 3 à celle de fermeture illustrée à la figure 4. Lors de l'actionnement en sens contraire du vérin 44, la tige 43 de ce dernier exerce un effort de traction sur l'articulation 49 qui déverrouille les deux bagues 5 et 25 ensemble, les rampes des tenons 26 de la deuxième bague 25 se trouvant alors à côté des rampes des tenons 6 de la première bague 5. Le corps du vérin 44 est monté pivotant autour d'une charnière 52 d'un montant 53 fixé sur le support 20. L'utilisation d'un dispositif à genouillère présente l'avantage que la force appliquée sur la biellette 45 par le vérin 44 est faible par rapport à la force de serrage qui est finalement appliquée à la deuxième bague 25.

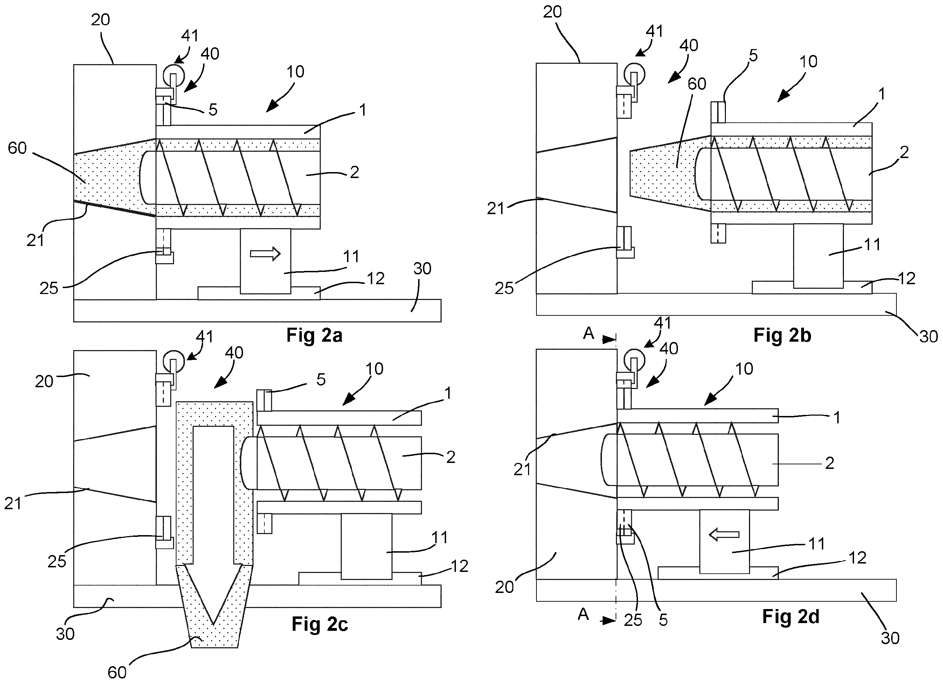

On va expliquer dans ce qui suit le fonctionnement du dispositif de nettoyage selon l'invention, en référence aux figures 2a à 2d et aux étapes de procédé de l'invention.

La fig. 2a illustre le dispositif de nettoyage de l'extrudeuse de l'invention à la fin de l'opération d'extrusion, lorsque la vis de l'extrudeuse est arrêtée pour procéder à la vidange de l'extrudeuse. Le vérin 44 du mécanisme de couplage automatique 40 reçoit une commande (en provenance d'une unité centrale ou d'un automate de commande et contrôle) pour procéder au déverrouillage des bagues 25 et 5, lorsque les tenons 6 sont amenés en face des espaces prévues entre les tenons 26, afin de pouvoir libérer le fourreau 1. La commande est ensuite donnée au vérin 14 pour déplacer le cadre mobile 11 en direction de la flèche illustrée sur la fig. 2a.

La fig. 2b illustre l'extrudeuse 10 dans sa position écartée du support 20 et donc de la filière 21. Le mélange résiduel 60 qui se trouvait initialement entre l'extrémité aval de la vis 2 et la filière 21 reste accroché à la vis et se trouve à distance de la filière. Dans une variante, on prévoit des griffes d'accroche du mélange afin de s'assurer qu'il reste entièrement solidaire de la vis. Les griffes 61 sont placées sur la première bague 5 à la sortie du fourreau 1. On prévoit une ou plusieurs griffes qui restent à demeure solidaires du fourreau 1 et traversent son épaisseur pour pénétrer dans le mélange résiduel 60. Dans une variante de l'invention, les griffes 61 servent d'insert pour y loger un capteur de pression ou de température du mélange. Les griffes sont dimensionnées de manière à être suffisamment longues pour ne pas libérer le mélange résiduel 60 lors de la déformation de celui-ci due au déplacement de l'extrudeuse. Dans une variante, la forme de l'orifice de sortie du fourreau 1, ou celui de la première bague 5, n'est pas circulaire, elle est réalisée de manière à faire office de griffe pour retenir le mélange résiduel lorsque la forme de la filière est en contre-dépouille.

A partir de la position illustrée en fig. 2b, on commence à entraîner en rotation la vis afin d'évacuer complètement le mélange restant à l'intérieur de l'extrudeuse, mélange qui tombe ensuite par gravité (selon la flèche de la fig. 2c) et est recueilli dans un récipient en dessous (non illustré). Lorsque des rouleaux sont prévus à la sortie aval de la filière, ils sont également entraînés en rotation dans cette étape pour évacuer le mélange restant entre les rouleaux et la filière.

La figure 2d illustre l'étape qui met fin à l'opération de nettoyage, l'extrudeuse 10 étant complètement vidangée et le mécanisme de couplage automatique 40 est en position de verrouillage. L'extrudeuse 10 est à nouveau opérationnelle, prête à recevoir un nouveau mélange d'élastomères, car le fourreau 1 se trouve en contact étanche avec le support 20 et donc avec la filière 21.

D'autres variantes et modes de réalisation de l'invention peuvent être envisagés sans sortir du cadre de ces revendications. Ainsi, on peut envisager de remplacer les tenons par un filetage continu réalisé dans chacune des bagues.

## Revendications

1. Dispositif de nettoyage d'une extrudeuse destinée à fonctionner avec des mélanges d'élastomères comportant un cadre (11) supportant une vis (2) et un fourreau (1), la vis (2) étant amenée à tourner autour de l'axe longitudinal X-X' du fourreau (1) lorsqu'elle est entraînée en rotation par des moyens d'entraînement, le fourreau comportant une entrée d'alimentation (3) en mélanges d'élastomères et une sortie (4) débouchant directement dans une filière d'extrusion (21) montée sur un support (20), **caractérisé en ce que** le cadre (11) est monté mobile en translation par rapport au support (20) de la filière (21) selon une direction parallèle à l'axe longitudinal X-X' entre une première position dans laquelle le fourreau (1) et la filière sont en contact étanche pour permettre au mélange d'élastomères de passer à travers la filière (21) et une deuxième position dans laquelle le fourreau (1) est écarté de la filière (21) pour réaliser le nettoyage, le plan de joint entre le fourreau (1) et la filière, selon lequel s'effectue la séparation et ensuite la jonction entre le fourreau (1) et la filière (21) lors du déplacement axial du cadre (11), étant sensiblement axisymétrique par rapport à l'axe X-X' et **en ce que** ledit dispositif comprend un mécanisme de couplage automatique (40) pour verrouiller et déverrouiller rapidement le fourreau (1) et la filière (21) et permettre le déplacement du cadre (11) entre les deux positions.

2. Dispositif selon la revendication 1, **caractérisé en ce que** ledit mécanisme de couplage automatique comprend un dispositif de verrouillage réalisé de manière à ce que les efforts de verrouillage soient uniformément répartis sur la circonférence du fourreau (1).

3. Dispositif selon l'une des revendications 1 ou 2, **caractérisé en ce que** ledit mécanisme de couplage automatique (40) comprend un système du type à vis et écrou comportant une première bague (5) qui entoure le fourreau (1) et coopère avec une deuxième bague (25) solidaire du support (20) et entourant la filière (21) et un mécanisme d'entraînement en rotation (41) de la vis ou de l'écrou.

4. Dispositif selon la revendication 3, **caractérisé en ce que** la deuxième bague (25) comporte des rampes inclinées, elle est coaxiale à la première bague (5) qui est solidaire de l'extrémité de sortie du fourreau (1) et comprend des rampes inclinées qui sont amenées à coopérer avec les rampes inclinées de la deuxième bague (25).

5. Dispositif selon la revendication 4, **caractérisé en ce que** les rampes inclinées desdites première et deuxième bague sont réalisées sous forme d'une pluralité de tenons (6, 26) uniformément répartis sur la circonférence de chaque bague, les tenons (6) d'une bague pouvant coulisser axialement dans les espaces existant entre les tenons (26) de l'autre bague.

6. Dispositif selon l'une des revendications 3 à 5, **caractérisé en ce que** ledit mécanisme d'entraînement en rotation (41) comprend un dispositif à genouillère (42) reliant de manière articulée l'une des bagues (25) à la tige (43) d'un vérin (44) d'actionnement en translation.

7. Dispositif selon l'une des revendications précédentes, **caractérisé en ce qu'**il comprend une unité centrale de contrôle en ouverture et fermeture du mécanisme de couplage automatique.

8. Installation comprenant un dispositif selon l'une des revendications 1 à 7, ladite installation étant **caractérisée en ce que** l'extrudeuse (10) débite dans l'entrefer formé entre un premier rouleau et un deuxième rouleau de calandrage qui sont rotatifs et sont amenés à tourner dans des sens contraires autour d'axes parallèles entre eux et perpendiculaires à l'axe longitudinal du fourreau, lesdits rouleaux de calandrage étant montés avec leurs systèmes d'entraînement respectifs sur le support (20), en sortie de la filière (21), de sorte à profiler sous forme de bande le mélange d'élastomères qui sort par la filière (21).

9. Procédé de nettoyage d'une extrudeuse destinée à fonctionner avec des mélanges d'élastomères comportant un cadre (11) supportant une vis (2) et un fourreau (1), la vis (2) étant amenée à tourner dans le fourreau (1) lorsqu'elle est entraînée en rotation autour de l'axe longitudinal X-X' du fourreau (1) par des moyens d'entraînement, le fourreau (1) comportant une entrée d'alimentation (3) en mélanges d'élastomères et une sortie (4) débouchant dans une filière d'extrusion (21) montée sur un support (20), le procédé comportant les étapes suivantes :
- déverrouiller le fourreau (1) par rapport à la filière (21) à l'aide d'un mécanisme de couplage automatique (40) permettant de verrouiller et déverrouiller rapidement le fourreau (1) et la filière selon un plan de joint sensiblement axisymétrique par rapport à l'axe X-X'
- déplacer en translation le cadre (11) par rapport au support (20) de la filière (21) selon une direction parallèle à l'axe longitudinal X-X' entre une première position dans laquelle le fourreau (1) et la filière (21) sont en contact étanche pour permettre au mélange d'élastomères de passer à travers la filière (21) et une deuxième position dans laquelle le fourreau (1), séparé de la filière (21) selon le plan de joint sensiblement axisymétrique par rapport à l'axe X-X', est écarté de la filière (21) pour permettre le nettoyage,
- entraîner la vis (2) en rotation pour réaliser la vidange de l'extrudeuse (10).

10. Procédé selon la revendication 9, **caractérisé en ce que** l'entraînement en rotation de la vis (2) dans la deuxième position du cadre (11) se fait dans un même sens que celui de rotation de la vis (2) lorsque le bâti (7) est dans la première position.

11. Procédé selon l'une des revendications 9 ou 10, **caractérisé en ce que** le déplacement en translation du cadre (11) se fait sur une distance au moins égale à la distance entre l'extrémité aval de la vis (2) et celle de la filière (21).

12. Procédé selon l'une des revendications 9 à 11, **caractérisé en ce que** la filière (21) a une forme convergente.

13. Procédé selon l'une des revendications 9 à 12, **caractérisé en ce que** le fourreau (1) comprend des griffes (61) d'accroche du mélange d'élastomère.

14. Procédé selon l'une des revendications 9 à 13, **caractérisé en ce que** la filière (21) de l'extrudeuse (10) débite dans l'entrefer formé entre un premier rouleau et un deuxième rouleau de calandrage.

15. Procédé selon la revendication 14, **caractérisé en ce que**, lorsque le cadre (11) est dans la deuxième position, lesdits premier et deuxième rouleaux de calandrage sont entraînés pour évacuer le mélange restant.

## Patentansprüche

1. Vorrichtung zur Reinigung eines Extruders, der dazu bestimmt ist, mit Elastomermischungen zu arbeiten, umfassend einen Rahmen (11), der eine Schnecke (2) und eine Hülle (1) trägt, wobei die Schnecke (2) um die Längsachse X-X' der Hülle (1) in Drehung versetzt wird, wenn sie von Antriebsmitteln drehend angetrieben wird, wobei die Hülle einen Einlass (3) zur Zufuhr von Elastomermischungen und einen Auslass (4) aufweist, der direkt in eine an einem Träger (20) montierte Extrusionsdüse (21) mündet, **dadurch gekennzeichnet, dass** der Rahmen (11) in Bezug auf den Träger (20) der Düse (21) in einer zur Längsachse X-X' parallelen Richtung zwischen einer ersten Position, in der die Hülle (1) und die Düse in dichtem Kontakt stehen, um den Durchgang der Elastomermischung durch die Düse (21) zu ermöglichen, und einer zweiten Position, in der die Hülle (1) von der Düse (21) entfernt ist, um die Reinigung zu ermöglichen, verschiebbar montiert ist, wobei die Trennebene zwischen der Hülle (1) und der Düse, in der die Trennung und anschließend die Verbindung zwischen der Hülle (1) und der Düse (21) bei der axialen Verschiebung des Rahmens (11) erfolgt, im Wesentlichen achsensymmetrisch in Bezug auf die Achse X-X' ist, und dass die Vorrichtung einen automatischen Kopplungsmechanismus (40) umfasst, um die Hülle (1) und die Düse (21) schnell zu verriegeln und zu entriegeln und um die Verschiebung des Rahmens (11) zwischen den beiden Positionen zu ermöglichen.

2. Vorrichtung nach Anspruch 1, **dadurch gekennzeichnet, dass** der automatische Kopplungsmechanismus eine Verriegelungsvorrichtung umfasst, die so ausgeführt ist, dass die Verriegelungskräfte gleichmäßig über den Umfang der Hülle (1) verteilt sind.

3. Vorrichtung nach einem der Ansprüche 1 oder 2, **dadurch gekennzeichnet, dass** der automatische Kopplungsmechanismus (40) ein System vom Schraube-Mutter-Typ mit einem ersten Ring (5), der die Hülle (1) umgibt und mit einem zweiten Ring (25) zusammenwirkt, der mit dem Träger (20) verbunden ist und die Düse (21) umgibt, und einen Mechanismus (41) zum Drehantrieb der Schraube oder der Mutter umfasst.

4. Vorrichtung nach Anspruch 3, **dadurch gekennzeichnet, dass** der zweite Ring (25) schräge Neigungen aufweist und koaxial zum ersten Ring (5) ist, der fest mit dem Auslassende der Hülle (1) verbunden ist und schräge Neigungen umfasst, die dazu veranlasst werden, mit den schrägen Neigungen des zweiten Rings (25) zusammenzuwirken.

5. Vorrichtung nach Anspruch 4, **dadurch gekennzeichnet, dass** die schrägen Neigungen des ersten und des zweiten Rings in Form von mehreren gleichmäßig über den Umfang jedes Rings verteilten Zapfen (6, 26) ausgeführt sind, wobei die Zapfen (6) eines Rings in den zwischen den Zapfen (26) des anderen Rings vorhandenen Räumen axial verschiebbar sind.

6. Vorrichtung nach einem der Ansprüche 3 bis 5, **dadurch gekennzeichnet, dass** der Drehantriebsmechanismus (41) eine Kniehebelvorrichtung (42) umfasst, die einen der Ringe (25) gelenkig mit der Stange (43) eines Translationsbetätigungszylinders (44) verbindet.

7. Vorrichtung nach einem der vorangehenden Ansprüche, **dadurch gekennzeichnet, dass** sie eine zentrale Einheit zur Steuerung des Öffnens und Schließens des automatischen Kopplungsmechanismus umfasst.

8. Anlage, umfassend eine Vorrichtung nach einem der Ansprüche 1 bis 7, wobei die Anlage **dadurch gekennzeichnet ist, dass** der Extruder (10) in den Luftspalt mündet, der zwischen einer ersten und einer zweiten Kalanderwalze, die drehbar sind und in entgegengesetzten Richtungen um zueinander parallele und zur Längsachse der Hülle senkrechte Achsen in Drehung versetzt werden, ausgebildet ist, wobei die Kalanderwalzen mit ihren jeweiligen Antriebssystemen am Träger (20) am Auslass der Düse (21) montiert sind, um die aus der Düse (21) austretende Elastomermischung streifenförmig zu profilieren.

9. Verfahren zur Reinigung eines Extruders, der dazu bestimmt ist, mit Elastomermischungen zu arbeiten, und einen Rahmen (11) umfasst, der eine Schnecke (2) und eine Hülle (1) trägt, wobei die Schnecke (2) in der Hülle (1) in Drehung versetzt wird, wenn sie von Antriebsmitteln um die Längsachse X-X' der Hülle (1) drehend angetrieben wird, wobei die Hülle (1) einen Einlass (3) zur Zufuhr von Elastomermischungen und einen Auslass (4) aufweist, der in eine an einem Träger (20) montierte Extrusionsdüse (21) mündet, wobei das Verfahren die folgenden Schritte aufweist:
- Entriegeln der Hülle (1) in Bezug auf die Düse (21) mit Hilfe eines automatischen Kopplungsmechanismus (40), der es ermöglicht, die Hülle (1) und die Düse entlang einer in Bezug auf die Achse X-X' im Wesentlichen achsensymmetrischen Trennebene schnell zu verriegeln und zu entriegeln;
- Verschieben des Rahmens (11) in Bezug auf den Träger (20) der Düse (21) in einer zur Längsachse X-X' parallelen Richtung zwischen einer ersten Position, in der die Hülle (1) und die Düse (21) in dichtem Kontakt stehen, um den Durchgang der Elastomermischung durch die Düse (21) zu ermöglichen, und einer zweiten Position, in der die Hülle (1), entlang der in Bezug auf die Achse X-X' im Wesentlichen achsensymmetrischen Trennebene von der Düse (21) getrennt, von der Düse (21) entfernt ist, um die Reinigung zu ermöglichen,
- drehendes Antreiben der Schnecke (2), um den Extruder (10) zu entleeren.

10. Verfahren nach Anspruch 9, **dadurch gekennzeichnet, dass** der drehende Antrieb der Schnecke (2) in der zweiten Position des Rahmens (11) in dergleichen Richtung erfolgt wie die Drehrichtung der Schnecke (2), wenn sich das Gestell (7) in der ersten Position befindet.

11. Verfahren nach einem der Ansprüche 9 oder 10, **dadurch gekennzeichnet, dass** die translatorische Verschiebung des Rahmens (11) über einen Abstand erfolgt, der mindestens gleich dem Abstand zwischen dem stromabwärtigen Ende der Schnecke (2) und dem der Düse (21) ist.

12. Verfahren nach einem der Ansprüche 9 bis 11, **dadurch gekennzeichnet, dass** die Düse (21) eine konvergente Form aufweist.

13. Verfahren nach einem der Ansprüche 9 bis 12, **dadurch gekennzeichnet, dass** die Hülle (1) Klauen (61) zum Greifen der Elastomermischung umfasst.

14. Verfahren nach einem der Ansprüche 9 bis 13, **dadurch gekennzeichnet, dass** die Düse (21) des Extruders (10) in den zwischen einer ersten und einer zweiten Kalanderwalze ausgebildeten Luftspalt mündet.

15. Verfahren nach Anspruch 14, **dadurch gekennzeichnet, dass**, wenn sich der Rahmen (11) in der zweiten Position befindet, die erste und die zweite Kalanderwalze angetrieben werden, um das verbleibende Gemisch abzuführen.

## Claims

1. Device for cleaning an extruder intended to operate with elastomer mixtures comprising a cradle (11) supporting a screw (2) and a cylinder (1), the screw (2) being made to turn about the longitudinal axis X-X' of the cylinder (1) when it is driven in rotation by driving means, the cylinder comprising a supply inlet (3) for elastomer mixtures and an outlet (4) emerging directly in an extrusion head (21) mounted on a support (20), **characterized in that** the cradle (11) is mounted movable in translation with respect to the support (20) of the extrusion head (21) in a direction parallel to the longitudinal axis X-X' between a first position in which the cylinder (1) and the extrusion head are in tight contact to allow the elastomer mixture to pass through the extrusion head (21) and a second position in which the cylinder (1) is separated from the extrusion head (21) to perform the cleaning, the seal plane between the cylinder (1) and the extrusion head along which the separation is made and then the join is made between the cylinder (1) and the extrusion head (21) upon the axial displacement of the cradle (11), being substantially axisymmetrical with respect to the axis X-X' and **in that** said device comprises an automatic coupling mechanism (40) for rapidly locking and unlocking the cylinder (1) and the extrusion head (21) and allowing the displacement of the cradle (11) between the two positions.

2. Device according to Claim 1, **characterized in that** said automatic coupling mechanism comprises a locking device produced in such a way that the locking forces are uniformly distributed over the circumference of the cylinder (1).

3. Device according to one of Claims 1 and 2, **characterized in that** said automatic coupling mechanism (40) comprises a system of the screw and nut type comprising a first ring (5) which surrounds the cylinder (1) and cooperates with a second ring (25) secured to the support (20) and surrounding the extrusion head (21) and a rotational driving mechanism (41) driving the screw or the nut.

4. Device according to Claim 3, **characterized in that** the second ring (25) comprises inclined ramps, it is coaxial to the first ring (5) which is secured to the outlet end of the cylinder (1) and comprises inclined ramps which are made to cooperate with the inclined ramps of the second ring (25).

5. Device according to Claim 4, **characterized in that** the inclined ramps of said first and second rings are produced in the form of a plurality of tenons (6, 26) uniformly distributed over the circumference of each ring, the tenons (6) of a ring being able to slide axially into the spaces that exist between the tenons (26) of the other ring.

6. Device according to one of Claims 3 to 5, **characterized in that** said rotational driving mechanism (41) comprises a toggle-locking device (42) linking one of the rings (25) in an articulated manner to the rod (43) of a translational actuating cylinder (44).

7. Device according to one of the preceding claims, **characterized in that** it comprises a central unit for controlling the opening and closing of the automatic coupling mechanism.

8. Installation comprising a device according to one of Claims 1 to 7, said installation being **characterized in that** the extruder (10) feeds into the air gap formed between a first calendering roller and a second calendering roller which are rotary and are made to rotate in counter directions about axes parallel to one another and at right angles to the longitudinal axis of the cylinder, said calendering rollers being mounted with their respective driving systems on the support (20), at the outlet of the extrusion head (21), so as to profile the elastomer mixture which exits through the extrusion head (21) in band form.

9. Method for cleaning an extruder intended to operate with elastomer mixtures comprising a cradle (11) supporting a screw (2) and a cylinder (1), the screw (2) being made to rotate in the cylinder (1) when it is driven in rotation about the longitudinal axis X-X' of the cylinder (1) by driving means, the cylinder (1) comprising a feed inlet (3) for elastomer mixtures and an outlet (4) emerging in an extrusion head (21) mounted on a support (20), the method comprising the following steps:
- unlocking the cylinder (1) from the extrusion head (21) using an automatic coupling mechanism (40) allowing the cylinder (1) and the extrusion head to be rapidly locked and unlocked along a joint plane that is substantially axisymmetrical with respect to the axis X-X'
- translationally displacing the cradle (11) with respect to the support (20) of the extrusion head (21) in a direction parallel to the longitudinal axis X-X' between a first position in which the cylinder (1) and the extrusion head (21) are in tight contact to allow the elastomer mixture to pass through the extrusion head (21) and a second position in which the cylinder (1), separated from the extrusion head (21) along the joint plane that is substantially axisymmetrical with respect to the axis X-X', is separated from the extrusion head (21) to allow the cleaning,
- driving the screw (2) in rotation to perform the emptying of the extruder (10).

10. Method according to Claim 9, **characterized in that** the rotational driving of the screw (2) into the second position of the cradle (11) is done in the same direction as that of rotation of the screw (2) when the frame (7) is in the first position.

11. Method according to one of Claims 9 and 10, **characterized in that** the translational displacement of the cradle (11) is done over a distance at least equal to the distance between the downstream end of the screw (2) and that of the extrusion head (21).

12. Method according to one of Claims 9 to 11, **characterized in that** the extrusion head (21) has a convergent form.

13. Method according to one of Claims 9 to 12, **characterized in that** the cylinder (1) comprises claws (61) for catching the elastomer mixture.

14. Method according to one of Claims 9 to 13, **characterized in that** the extrusion head (21) of the extruder (10) feeds into the air gap formed between a first calendering roller and a second calendering roller.

15. Method according to Claim 14, **characterized in that**, when the cradle (11) is in the second position, said first and second calendering rollers are driven to discharge the remaining mixture.
